# EUROPÄISCHE PATENTSCHRIFT

(11) **EP 1 234 807 B1**
(45) Veröffentlichungstag und Bekanntmachung des Hinweises auf die Patenterteilung: **28.12.2005**
(21) Anmeldenummer: 02004129.9
(22) Anmeldetag: 25.02.2002
(51) Int. Cl.: C04B 35/66, C04B 35/18, F27D 1/00, C04B 33/36

(54) **Feuerfester Formkörper mit erhöhter Alkalibeständigkeit**
Refractory body with increased alkali resistance
Corps moulé réfractaire avec une résistance aux alcalis élevée

(30) Priorität: 26.02.2001 DE 10109267
(43) Veröffentlichungstag der Anmeldung: 28.08.2002
(73) Patentinhaber: Refratechnik Holding GmbH, 85737 Ismaning (DE)
(72) Erfinder: Liever, Heinrich, Dr., 37127 Dransfeld (DE); Klischat, Hans-Jürgen, Dr., 37130 Gleichen (DE); Wirsing, Holger, Dipl.-Ing., 37083 Göttingen (DE)
(74) Vertreter: Patentanwälte Dr. Solf & Zapf

(56) Entgegenhaltungen:
- DE-A- 3 633 816
- US-A- 4 424 281
- US-A- 4 751 204
- DATABASE WPI Section Ch, Week 198617 Derwent Publications Ltd., London, GB; Class L02, AN 1986-110288 XP002201963 & JP 61 053173 A (KAWASAKI ROZAI KK), 17. März 1986 (1986-03-17)
- Produktspezifikation von Exolon DCF SiC Pulver

## Beschreibung

Die Erfindung betrifft einen feuerfesten Versatz und ein Verfahren zu seiner Herstellung und einen feuerfesten Formkörper hieraus.

Feuerfeste Werkstoffe, die bei der Auskleidung von Ofengefäßen und Ofenräumen verwendet werden, unterliegen häufig einer hohen chemisch-korrosiven Belastung durch Alkalisalze einer komplexen Zusammensetzung. Diese chemisch-korrosive Belastung herrscht insbesondere in einem Temperaturintervall von 700°C bis 1300 °C.

Die Herkunft der Salze ist dabei komplex. So setzen sowohl das Brenngut als auch die Brennstoffe oft Alkalien frei. Diese Alkalien bilden bekanntermaßen dünnflüssige Salze im entsprechenden Temperaturintervall und sind in den meisten feuerfesten bzw. keramischen Systemen als Fließmittel, d. h. Schmelzpunkterniedriger wirksam.

In der Zementindustrie beispielsweise stammen die Alkalien zu einem Teil aus den - insbesondere tonhaltigen - Rohstoffen. Ferner ist die Alkalienbelastung durch die heute verwendeten Brennstoffe erheblich gestiegen, insbesondere wurde beim Brennen des Zementklinkers in Drehrohöfen ein Wechsel des Brennstoffs von relativ sauberem Erdgas und Öl auf minderwertigere Kohlen sowie Abfallbrennstoffe wie Gummireifen, Altöle, Kunststoffe und Lösungsmittel vollzogen. Diese Brennstoffe haben den Vorteil, dass sie bei einem ausreichenden Energiegehalt günstig sind und zudem bei den in den Drehrohöfen herrschenden Temperaturen diese Reststoffe gleichzeitig thermisch entsorgt werden. Der chemisch-korrosive Verschleiß durch volative Stoffe, wie komplexe Alkalisalze, die beim Verbrennen entweichen beziehungsweise gebildet werden hat sich jedoch drastisch erhöht. Diese chemisch-korrosiven, komplexen Salze bestehen im wesentlichen aus: K⁺, Na⁺, O²⁻, SO₃²⁻, Cl⁻, OH⁻, F⁻, S²⁻. Je nach molarem Verhältnis bestehen die entstehenden chemischen korrosiven Salze im wesentlichen aus den Einzelkomponenten: K₂SO₄, Na₂SO₄, Na₂O, K₂O, NaOH, KOH, KCl, NaCl. Einen weiteren Einfluß auf die Zusammensetzung dieser Salze hat der Sauerstoffpartialdruck sowie das molare Verhältnis von Alkalioxiden zu SO₃. Bei niedrigem Sauerstoffpartialdruck beispielsweise liegen Sulfide, bei hohem die entsprechenden Sulfate vor. Bei einem molaren Verhältnis von Alkalioxid zu SO₃ von unter 1 tritt neben Alkalisulfat Alkalioxid auf, bei einem molaren Verhältnis von über 1 neben Alkalisulfat auch SO₂/SO₃.

Der Temperaturbereich von 700 bis 1300 °C ist deshalb besonders kritisch, da sich die Alkalisalze, die oberhalb von 1300 °C üblicherweise flüchtig sind, in dem angegebenen Temperaturintervall auf der feuerfesten Auskleidung niederschlagen und diese dort infiltrieren und korrodieren. Unter der Wirkung des Temperaturgradienten erfolgt diese Infiltration und Korrosion sehr tiefgründig, in vielen Fällen sogar bis zum metallischen Ofenmantel. Besonders stark belastet ist deshalb beispielsweise bei einem Drehrohrofen der Ofenabschnitt bzw. die feuerfeste Auskleidung des Ofenabschnitts, in dem Temperaturen von 700 bis 1300 °C bestehen. Die Korrosionsvorgänge sind zum einen die Infiltration, wobei durch die Infiltration durch die Alkalisalze das Gefüge verdichtet und versprödet wird und zudem eine Auflockerung der Bindung durch den Kristallisationsdruck herbeigeführt wird. Hieraus resultiert ein vorzeitiger Verschleiß durch Heißabrieb und Abplatzungen. Ferner wird durch die Erhöhung der thermischen Leitfähigkeit in Verbindung mit den zuvor beschriebenen Verschleißmechanismen eine schädliche Überhitzung des metallischen Ofenmantels möglich.

Zudem findet eine chemische Korrosion statt, bei der die Infiltrate mit den primären Phasen der feuerfesten Auskleidung unter Neubildung sekundärer Phasen mit niedrigerem Schmelzpunkt, insbesondere Schmelzpunkten unter dem eigentlichen Anwendungsschmelzpunkt, reagieren. Ferner können Volumenexpansionen beobachtet werden. Insgesamt findet der Verschleiß durch chemische Korrosion dann durch Abschmelzen, Heißabrieb und ebenfalls Abplatzungen statt.

Es ist bekannt, in den Sicherheits- und Vorwärmzonen von Drehöfen der Zementindustrie feuerfeste Formkörper mit Al₂O₃-Gehalten von 40 bis 60 Gew.-% einzusetzen.

Für die Herstellung von tonerdereichen Steinen, wie sie insbesondere in dem angegebenen Bereich von Zementdrehrohröfen verwendet werden, können sowohl natürliche als auch synthetisch erzeugte Rohstoffe eingesetzt werden, das sind insbesondere natürliche Rohstoffe aus der Sillimanit-Gruppe, Bauxit und feuerfester Ton. Als synthetische Rohstoffe kommen Sintermullit, Schmelzmullit, kalzinierte Tonerde, Sinterkorund und Schmelzkorund in Frage. Bisher wurden bereits viele Versuche unternommen, die Alkalibeständigkeit von feuerfesten Erzeugnissen aus dem System Al₂O₃-SiO₂ insbesondere im Zementbereich zu verbessern.

Die DE 36 33 816 betrifft eine feuerfeste Zusammensetzung zur Herstellung von feuerfesten Steinen, die hohe Widerstandsfähigkeit gegen alkalischen Angriff besitzen sollen. Das beschriebene Material soll einen minimalen Tonerdegehalt von 60 Gew.-% aufweisen. In dieser Druckschrift wird dargelegt, daß eine der Lösungen zur Verbesserung der Alkalibeständigkeit die Verringerung des Tonerdegehalts von einem Minimum von 60 Gew.-% auf 50 Gew.-% gewesen sei. Diesen 50 Gew.-% Al₂O₃ wären 50 Gew.-% SiO₂ zugesetzt worden. Dies geht jedoch in erheblichem Maße zu Lasten der feuerfesten Eigenschaften des Steins, so daß insgesamt zwar eine verbesserte Alkalibeständigkeit, jedoch eine unbefriedigende Feuerfestigkeit erreicht werden. Um die Alkalibeständigkeit zu steigern, wurden tonerdereiche Steine mit 60 Gew.-% Tonerde mit Zirkon, phosphoriger Säure, Titandioxid und Borsäure versetzt. Außerdem wurden Versuche mit einer relativ kleinen Menge Siliziumcarbid durchgeführt. In dieser Druckschrift wird dargelegt, daß der Zusatz von Zirkon, Titandioxid und Borsäure nur eine geringe Verbesserung der Alkaliwiderstandsfähigkeit erzeuge, während der Zusatz von phosphoriger Säure (Phosphatbindung) eine Verbesserung der Widerstandsfähigkeit erbrachte, jedoch keine besonders starke. Demgegenüber hätte der Zusatz von siliziumcarbid eine deutliche Verbesserung der Alkaliwiderstandfähigkeit der Mischung bewirkt. Hierbei wird dargelegt, daß bereits ein Zusatz von 10 Gew.-% Siliziumcarbid eine beachtliche Verbesserung bewirkt. Es wird jedoch darauf hingewiesen, daß das Siliziumcarbid im Feinanteil oder der Matrix der Mischung (< 0,2 mm) zugesetzt werden muß. Ferner ergibt sich aus der Tabelle 2 dieser Druckschrift, daß die Phosphatbindung in Verbindung mit dem Zusatz von SiC einen negativen Einfluß auf die Alkalibeständigkeit hat.

Aus der US 5 382 555 ist ein feuerfester Formkörper mit einem Gehalt von zumindestens 50 M-% Al₂O₃ bekannt, wobei Metallcarbid-Teilchen in einer Menge von 3 bis 25 M-% anwesend sein sollen. Gegenstand dieser Druckschrift ist auch die Verbesserung eines hochtonerdehaltigen Formkörpers bezüglich seiner Resistenz gegen geschmolzene Schlacken, wobei dieser Stein im wesentlichen frei von sog. "Schwarzen Kernen" sein soll. Diese "Schwarzen Kerne" sind das Ergebnis einer unvollständigen Oxidation von Kohlenstoff im Formkörper bzw. im Rohmaterial. Diese "Schwarzen Kerne" haben nicht nur ästhetische Nachteile, sondern besitzen Eigenschaften, welche unerwünscht sind, insbesondere eine verminderte Temperaturwechselbeständigkeit sowie die Neigung zu Abplatzungen im Einsatz. Dies wird auf Gefügeinhomogenitäten zurückgeführt. Diese Druckschrift schlägt vor, eine Mischung derart herzustellen, daß das gebrannte Produkt einen feuerfesten, tongebundenen hochaluminiumhaltigen Grundversatz aufweist, wobei der Tonerdegehalt zumindestens 50 % betragen soll, wobei zudem metallisches Carbid, insbesondere Siliziumcarbid in Zusätzen von 3 % bis 25 % zugesetzt ist, wobei jedoch auf keinen Fall mehr als 1,5 % Metallcarbid < -325 mesh (45 µm) zugesetzt werden dürfen.

Die US 4 751 204 betrifft zweiteilige, spritzbare feuerfeste Massen, bei denen feine Pulver eines feuerfesten Gemisches und feuerfeste Feinstpulver zuvor in eine Aufschlämmungsform gebracht werden, die ein Verflüssigungsmittel enthält. Dadurch wird die Menge an Tonerdeschmelzzement und auch an Wasser herabgesetzt, um einen durch Spritzen aufgebrachten Niederschlag von einer Qualität zu erreichen, der mit einem durch Gießen hergestellten vergleichbar ist.

Trotz der umfangreichen angegebenen Literatur, die feuerfeste Formkörper beschreibt, welche SiC-haltig sind, spielen derartige Formkörper auf dem Markt überhaupt keine Rolle, da ihre Eigenschaften nicht zu beherrschen sind. Zwar werden unter der Marke Carsial SiC-haltige Formkörper vertrieben, diese haben jedoch sehr hohe SiC-Gehalte im Bereich von 43 bis 90 %.

Aufgabe der Erfindung ist es, einen homogen gebrannten tonerdehaltigen feuerfesten Formkörper mit hoher Alkalibeständigkeit ohne gefügeeigenschaftsbeeinträchtigenden schwarzen Kern zu schaffen, sowie ein Verfahren zu dessen Herstellung.

Die Aufgabe wird einem Versatz mit den Merkmalen es Anspruchs 1 und einem feuerfesten Formkörper mit den Merkmalen des Anspruchs 18 gelöst, vorteilhafte Weiterbildungen sind in Unteransprüchen gekennzeichnet.

Es ist ferner eine Aufgabe, ein Verfahren zur Herstellung des Versatzes und Formkörpers zu schaffen. Die Aufgabe wird mit den Merkmalen des Anspruch 8 gelöst, vorteilhafte Weiterbildungen sind in den hiervon abhängigen Unteransprüchen gekennzeichnet.

Die Erfindung wird beispielhaft anhand einer Zeichnung erläutert. Es zeigen dabei:
- Fig. 1: die Kornverteilung und die Summenkurve der Kornverteilung des erfindungsgemäß verwendeten SiC,
- Fig. 2: einen erfindungsgemäßen Formkörper mit eingeschnittenem Tiegel im Querschnitt nach dem Alkaliangriff durch K₂O
- Fig. 3: einen Vergleichsformkörper ohne SiC nach dem Alkaliangriff, welcher durch Alkaliangriff vollständig zerstört wurde.

Erfindungsgemäß wurde herausgefunden, dass überraschenderweise bei einem Versatz bzw. Formkörper hieraus, der 40 % bis 60 % Al₂O₃ und 3 % bis 15 % feinteiliges SiC enthält, eine dramatische Verbesserung der Alkalibeständigkeit erzielt werden kann, wenn eine Phosphatbindung verwendet wird. Dies ist umso überraschender, als bislang davon ausgegangen wurde, dass der Zusatz von feinteiligem SiC einerseits und die Phosphatbindung, z. B. durch Phosphorsäure oder Monoaluminiumphosphat, in Verbindung mit SiC andererseits starke Nachteile für feuerfeste Formkörper oder Versätze bringen.

Erfindungsgemäß wird entgegen der bisherigen fachmännischen Überzeugung mehr als 1,5 % SiC < 0,045 mm zu gefügt, wobei ca. 75 % des zugefügten SiC im Bereich < 0,045 mm liegen. Insgesamt liegen somit zumindestens 2,3 % des SiC bezogen auf die Menge des Gesamtversatzes unter 0,045 mm, bei einer Zusatzmenge von 3 % bezogen auf die Gesamtmasse. In Versuchen konnte festgestellt werden, dass auch bei einem erfindungsgemäß hergestellten feuerfesten Formkörper "Schwarze Kerne" entstehen können. Überraschenderweise wurde jedoch festgestellt, dass durch diese "Schwarzen Kerne" bei dem erfindungsgemäßen Formkörper keine Gefügeinhomogenitäten derart entstehen, dass dieser "Schwarze Kern" eine Schwächung des Gefüges verursachen würde. Worauf dies zurückzuführen ist, ist derzeit nicht ersichtlich.

Die Erfindung wird nachfolgend anhand eines Beispiels erläutert. Ein tonerdereicher Rohstoff mit 51 Gew.-% Al₂O₃ mit einem Maximalkorn von 4 mm und einer Kornverteilung entsprechend einer typischen Fullerkurve wird mit 5 % eines feuerfesten Bindetons vermischt, wobei 5 % SiC der Korngröße 0 bis 0,9 mm zugemischt wird. Diese Mischung wird mit der erforderlichen üblichen Menge an Phosphorsäure als Binderkomponente versetzt. Nachdem bis zur Homogenität gemischt wird, wird die so erhaltene Mischung bzw. der so erhaltene Versatz mit einem Preßdruck von 90 MPa verpreßt. Anschließend werden die erhaltenen Formkörper bei Temperaturen oberhalb 100 °C, insbesondere 120 °C, getrocknet und nach erfolgter Trocknung bei einer Sintertemperatur von ca. 1260 °C gebrannt. Zum Vergleich wird ein Stein auf gleiche Weise hergestellt, wobei an Stelle des Siliziumcarbids der tonerdereiche, feuerfeste Rohstoff bzw. die feuerfeste Hauptkomponente in der dem SiC entsprechenden Körnung zugesetzt ist. Nach dem Brand zeigen beide Formkörper ein homogenes Aussehen und ein homogenes Gefügebild. Ein "Schwarzer Kern" war bei dem Siliziumcarbidstein nicht vorhanden.

Nach dem Brand wurden aus den beiden Steinen nach DIN 51069 Tiegel geschnitten, die eine Kantenlänge von 70 mm und eine Innenbohrung von 40 mm Durchmesser aufwiesen. In diese Tiegel wurden, um einen Alkaliangriff zu simulieren, 70 g Kaliumcarbonat gefüllt. Die Tiegel wurden anschließend mit einem Deckel aus dem gleichen Material verschlossen und für fünf Stunden in einem Ofen bei einer Temperatur von 1100 °C behandelt.

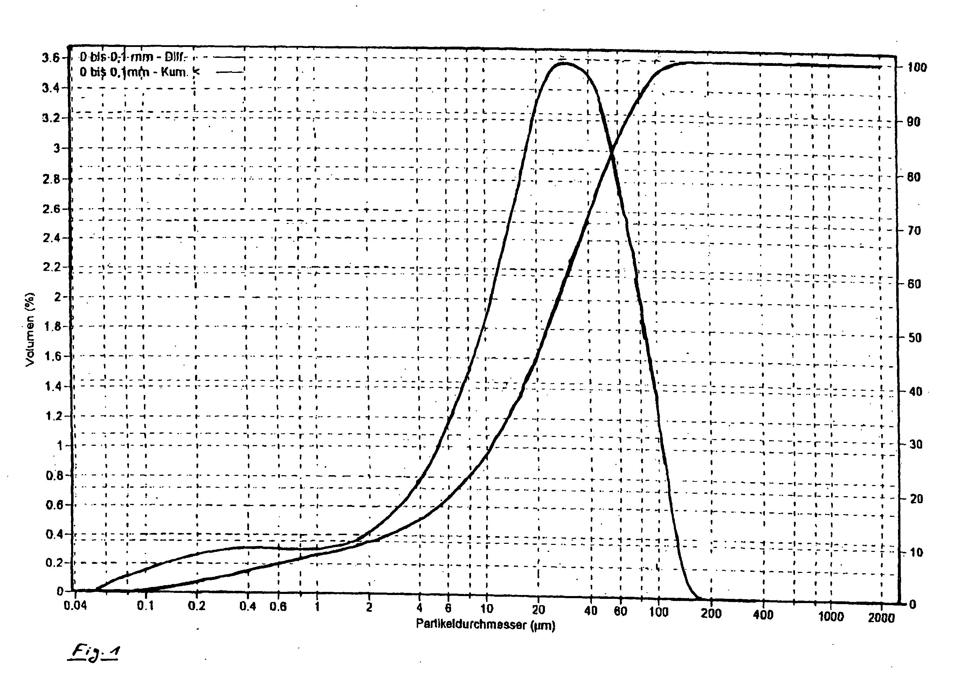

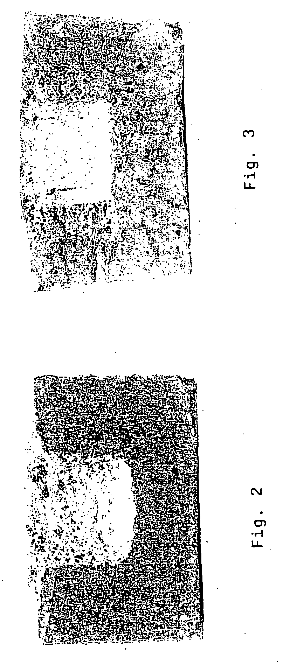

Das Ergebnis nach dem Brand ist, daß der SiC-freie Formkörper (Fig. 3) durch den Alkaliangriff stark zerstört worden ist und große Risse aufweist. Das Gefüge weist deutliche Infiltration auf.

Im Gegensatz hierzu zeigt der Stein mit fünf Prozent feinteiligem SiC und einer Phosphatbindung (Fig. 2) keine Beeinflußung des Gefüges durch den Alkaliangriff auf. Der Formkörper ist rißfrei. Die Alkalibeständigkeit des erfindungsgemäßen Formkörpers ist dabei überraschenderweise so hoch, daß Kaliumcarbonat aus dem Tiegel übergekocht ist, da es in das Steingefüge nicht eindringen konnte.

Der Mechanismus, der zu der beobachteten dramatischen Erhöhung der Alkalibeständigkeit führt, ist bisher nicht bestimmt.

Bei dem erfindungsgemäßen Formkörper ist von Vorteil, daß er eine extrem hohe Alkalibeständigkeit aufweist, so daß er überall dort eingesetzt werden kann, wo hohe Alkalikonzentrationen im Hochtemperaturprozeß auftreten. Dies sind beispielsweise Vorwärm-, Sicherheits- und Übergangszonen von Drehrohröfen der Stein- und Erdenindustrie sowie auch Sinterzonen derartiger Öfen bei gemäßigter Temperaturbeanspruchung.

## Patentansprüche

1. Versatz zur Herstellung eines feuerfesten Formkörpers enthaltend Al₂O₃, eine Phosphatbinderkomponente sowie Sic, **gekennzeichnet durch**
a) eine feuerfeste, Al₂O₃ enthaltende metalloxidische Hauptkomponente, welche 40 bis 60 Gew.-% Al₂O₃ enthält, wobei im Versatz 80 bis 97 Gew.-% der metalloxidischen Hauptkomponente enthalten sind,
b) eine Phosphatbindung, insbesondere **durch** Phosphorsäure und Monoaluminiumphosphat, und
c) feinteiliges SiC mit einer Korngröße < 0,2 mm, wobei 3 bis 15 Gew.-% feinteiliges SiC im Versatz enthalten sind, wobei die Kornverteilung des SiC derart gewählt ist, dass mehr als 2,0 Ges.-% SiC bezogen auf die Versatzmenge < 0,045 mm sind.

2. Versatz nach Anspruch 1, **dadurch gekennzeichnet, dass**
der SiC-Anteil zwischen 3 und 8 Gew.-% liegt.

3. Versatz nach einem der vorhergehenden Ansprüche,
**dadurch gekennzeichnet, dass**
das Siliziumcarbid ein erschmolzenes Siliziumcarbid ist.

4. Versatz nach einem der vorhergehenden Ansprüche,
**dadurch gekennzeichnet, dass**
das Siliziumcarbid ein Siliziumcarbidregenerat ist.

5. Versatz nach einem der vorhergehenden Ansprüche,
**dadurch gekennzeichnet, dass**
die feuerfeste, Al₂O₃ enthaltende metalloxidische Hauptkomponente natürliche Rohstoffe aus der Sillimanit-Gruppe und/oder Bauxit und/oder feuerfesten Ton und/oder synthetische Rohstoffe wie Sintermullit, Schmelzmullit, kalzinierte Tonerde, Sinterkorund und/oder Schmelzkorund aufweist.

6. Versatz nach einem der vorhergehenden Ansprüche,
**dadurch gekennzeichnet, dass**
die feuerfeste Hauptkomponente bis 15 % feuerfesten Ton enthält.

7. Verfahren zum Herstellen eines Versatzes, enthaltend Al₂O₃, eine Phosphatbinderkomponente sowie SiC, nach einem der Ansprüche 1 bis 6,
**dadurch gekennzeichnet, dass**
eine feuerfeste, Al₂O₃ enthaltende metalloxidische Hauptkomponente, welche 40 bis 60 Gew.-% Al₂O₃ enthält sowie feinteiliges SiC mit einer Korngröße < 0,2 mm sowie als Binderkomponente Phosphorsäure bzw. Monaluminiumphosphat miteinander gemischt werden, wobei das SiC in einer Feinheit und Menge derart zugegeben wird, dass mehr als 2,0 M-% bezogen auf den Gesamtversatz des SiC < 0,045 mm sind.

8. Verfahren nach Anspruch 7,
**dadurch gekennzeichnet, dass**
80 bis 97 Gew.-% der Hauptkomponente zugemischt werden.

9. Verfahren nach Anspruch 7 und/oder 8,
**dadurch gekennzeichnet,** das
zwischen 3 und 8 Gew.-% SiC zugemischt werden.

10. Verfahren nach einem der Ansprüche 7 bis 9,
**dadurch gekennzeichnet, dass**
bis zu 15 % der Hauptkomponente durch feuerfesten Ton ersetzt werden.

11. Versatz nach einem der Ansprüche 7 bis 10,
**dadurch gekennzeichnet, dass**
als Siliziumcarbid ein erschmolzenes Siliziumcarbid verwendet wird.

12. Verfahren nach einem der Ansprüche 7 bis 11,
**dadurch gekenntzeichnet,** dass
als Siliziumcarbid ein Siliziumcarbidregenerat verwendet wird.

13. Verfahren nach einem der Ansprüche 7 bis 12,
**dadurch gekennzeichnet, dass**
als feuerfeste, Al₂O₃ enthaltende metalloxidische Hauptkomponente natürliche Rohstoffe, wie Rohstoffe aus der Sillimanit-Gruppe, Bauxit oder feuerfester Ton und/oder synthetisches Rohstoffe wie Sintermullit, Schmelzmullit, kalzinierte Tonerde, Sinterkorund oder Schmelzkorund verwendet werden.

14. Verfahren nach einem der Ansprüche 7 bis 13,
**dadurch gekennzeichnet, dass**
die feuerfeste, Al₂O₃ enthaltende Hauptkomponente mit einem Maximalkorn von 4 mm und einer Kornverteilung entsprechend einer typischen Fullerkurve verwendet wird.

15. Verfahren nach einem der Ansprüche 7 bis 14,
**dadurch gekennzeichnet, dass**
der Versatz mit einem Pressdruck von 60 bis 110 MPa zu Formkörpern verpresst wird.

16. Verfahren nach einem der Ansprüche 7 bis 15,
**dadurch gekennzeichnet, dass**
die Formkörper bei Temperaturen oberhalb 100 °C, insbesondere 120°C, getrocknet werden.

17. Verfahren nach einem der Ansprüche 7 bis 16,
**dadurch gekennzeichnet, dass**
die Formkörper nach der Trocknung bei einer Sintertemperatur von ca. 1100° bis 1400°C gebrannt werden.

18. Feuerfester Formkörper enthaltend A1203, eine Phosphatbinderkomponente sowie SiC, **dadurch gekennzeichnet, dass**
der feuerfeste Formkörper aus einem Versatz nach einem oder mehreren der Ansprüche 1 bis 6, insbesondere mit einem Verfahren nach einem oder mehreren der Ansprüche 7 bis 17 geformt ist.

## Claims

1. A batch for producing a refractory moulded body containing Al₂O₃, a phosphate binding component and SiC,
**characterised by**
a) a refractory, Al₂O₃-containing, metal oxide main component, which contains 40 to 60 wt.% Al₂O₃, the batch containing 80 to 97 wt.% of the metal oxide main component,
b) phosphate bonding, particularly by phosphoric acid and a monoaluminium phosphate, and
c) fine-grain SiC with a particle size < 0.2 mm, 3 to 15 wt.% fine-grain SiC being contained in the batch, the particle distribution of the SiC being selected such that, with respect to the batch quantity, more than 2.0 wt.% SiC are < 0.045 mm.

2. A batch according to Claim 1, **characterised in that** the SiC content is between 3 and 8 wt.%.

3. A batch according to one of the preceding claims, **characterised in that** the silicon carbide is a smelted silicon carbide.

4. A batch according to one of the preceding claims, **characterised in that** the silicon carbide is a regenerated silicon carbide.

5. A batch according to one of the preceding claims, **characterised in that** the refractory, Al₂O₃-containing, metal oxide main component contains natural raw materials from the simillanite group and/or bauxite and/or refractory clay and/or synthetic raw materials such as sintered mullite, molten mullite, calcinated alumina, sintered corundum and/or molten corundum.

6. A batch according to one of the preceding claims, **characterised in that** the refractory main component contains up to 15% refractory clay.

7. A process for producing a batch containing Al₂O₃, a phosphate binding component and SiC, according to one of Claims 1 to 6, **characterised in that** a refractory, Al₂O₃-containing, metal oxide main component, which contains 40 to 60 wt.% Al₂O₃, and fine-grain SiC with a particle size of < 0.2 mm and phosphoric acid or monoaluminium phosphate as a binding component are mixed together, the fineness and quantity of the SiC added being such that, with respect to the total batch, more than 2.0 M.% SiC are < 0.045 mm.

8. A process according to Claim 7, **characterised in that** 80 to 97 wt.% of the main component are admixed.

9. A process according to Claim 7 and/or 8, **characterised in that** between 3 and 8 wt.% SiC are admixed.

10. A process according to one of Claims 7 to 9, **characterised in that** up to 15% of the main component are replaced by refractory clay.

11. A batch according to one of Claims 7 to 10, **characterised in that** a smelted silicon carbide is used as the silicon carbide.

12. A process according to one of Claims 7 to 11, **characterised in that** a regenerated silicon carbide is used as the silicon carbide.

13. A process according to one of Claims 7 to 12, **characterised in that** natural raw materials, such as raw materials from the simillanite group, bauxite or refractory clay and/or synthetic raw materials such as sintered mullite, molten mullite, calcinated alumina, sintered corundum or molten corundum, are used as the refractory, Al₂O₃-containing, metal oxide main component.

14. A process according to one of Claims 7 to 13, **characterised in that** the refractory, Al₂O₃-containing, metal oxide main component used has a maximum particle size of 4 mm and a particle distribution according to a typical Fuller curve.

15. A process according to one of Claims 7 to 14, **characterised in that** the batch is pressed into moulded bodies using a pressure force of 60 to 110 MPa.

16. A process according to one of Claims 7 to 15, **characterised in that** the moulded bodies are dried at temperatures greater than 100°C, particularly 120°C.

17. A process according to one of Claims 7 to 16, **characterised in that** the moulded bodies are fired after drying at a sinter temperature of ca. 1100° to 1400°C.

18. A refractory moulded body containing Al₂O₃, a phosphate binding component and SiC, **characterised in that** the refractory body is moulded from a batch according to one or more of Claims 1 to 6, particularly using a process according to one or more of Claims 7 to 17.

## Revendications

1. Mélange pour la fabrication de corps moulés réfractaires, contenant de l'Al₂O₃, un composant liant de phosphate, ainsi que du SiC, **caractérisé par**
a) un composé principal réfractaire d'oxydes métalliques, contenant de l'Al₂O₃, qui contient 40 à 60 % en poids d'Al₂O₃, sachant que dans le mélange, 80 à 97 % en poids du composé principal d'oxydes métalliques sont contenus,
b) une liaison phosphatique, en particulier par de l'acide phosphorique et du phosphate monoaluminique, et
c) du SiC fin, d'une taille de particules < 0,2 mm, sachant que 3 à 15 % en poids de SiC fin sont contenus dans le mélange, sachant que la distribution granulométrique du SiC est choisie telle que plus de 2 % en poids de SiC, rapportés à la quantité du mélange, sont < 0,045 mm.

2. Mélange selon la revendication 1, **caractérisé en ce que** la proportion de SiC est comprise entre 3 et 8 % en poids.

3. Mélange selon l'une des revendications précédentes,
**caractérisé en ce que**
le carbure de silicium est un carbure de silicium fondu.

4. Mélange selon l'une des revendications précédentes,
**caractérisé en ce que**
le carbure de silicium est un carbure de silicium régénéré.

5. Mélange selon l'une des revendications précédentes,
**caractérisé en ce que**
le composant réfractaire d'oxydes métalliques contenant de l'Al₂O₃ comporte des matières premières naturelles du groupe sillimanite et/ou de la bauxite et/ou de l'argile réfractaire et/ou des matières premières synthétiques comme de la mullite frittée, de la mullite fondue, de l'argile calcinée, du corindon fritté et/ou du corindon fondu.

6. Mélange selon l'une des revendications précédentes,
**caractérisé en ce que**
le composant réfractaire contient jusqu'à 15 % d'argile réfractaire.

7. Procédé de préparation d'un mélange contenant de l'Al₂O₃, un composant liant de phosphate ainsi que du SiC, selon l'une des revendications 1 à 6,
**caractérisé en ce que**
un composant principal réfractaire d'oxydes métalliques contenant de l'Al₂O₃, lequel contient 40 à 60 % en poids d'Al₂O₃, ainsi que du SiC fin d'une taille de particules < 0,2 mm, ainsi que, comme composant liant, de l'acide phosphorique, respectivement du phosphate monoaluminique, sont mélangés ensemble, sachant que le SiC est ajouté en une finesse et une quantité telles que plus de 2,0 M % du SiC, rapportés à l'ensemble du mélange, sont < 0,045 mm.

8. Procédé selon la revendication 7,
**caractérisé en ce que**
80 à 97 % en poids du composant principal sont mélangés.

9. Procédé selon la revendication 7 et/ou 8,
**caractérisé en ce que**
entre 3 et 8 % de SiC sont mélangés.

10. Procédé selon l'une des revendications 7 à 9,
**caractérisé en ce que**
jusqu'à 15 % du composant principal sont remplacés par de l'argile réfractaire.

11. Procédé selon l'une des revendications 7 à 10,
**caractérisé en ce que**
un carbure de silicium fondu est utilisé comme carbure de silicium.

12. Procédé selon l'une des revendications 7 à 11,
**caractérisé en ce que**
un carbure de silicium régénéré est utilisé comme carbure de silicium.

13. Procédé selon l'une des revendications 7 à 12,
**caractérisé en ce que**
comme composant principal réfractaire d'oxydes métalliques contenant de l'Al₂O₃ sont utilisées des matières premières naturelles, comme les matières premières du groupe de la sillimanite, la bauxite ou l'argile réfractaire, et/ou des matières premières synthétiques comme la mullite frittée, la mullite fondue, l'argile calcinée, le corindon fritté ou le corindon fondu.

14. Procédé selon l'une des revendications 7 à 13,
**caractérisé en ce que**
le composant principal réfractaire contenant de l'Al₂O₃ est utilisé avec un grain maximal de 4 mm et une répartition granulométrique correspondant à une courbe de Fuller typique.

15. Procédé selon l'une des revendications 7 à 14,
**caractérisé en ce que**
le mélange est comprimé en des corps moulés avec une pression de compression 60 à 110 Mpa.

16. Procédé selon l'une des revendications 7 à 15,
**caractérisé en ce que**
les corps moulés sont séchés à des températures au-dessus de 100 °C, en particulier de 120 °C.

17. Procédé selon l'une des revendications 7 à 16,
**caractérisé en ce que**
les corps moulés sont cuits après le séchage à une température de frittage d'environ 1100 ° à 1400 °C.

18. Corps moulé réfractaire contenant de l'Al₂O₃, un composant liant de phosphate ainsi que du SiC, **caractérisé en ce que** le corps moulé réfractaire est formé en un mélange selon l'une ou plusieurs des revendications 1 à 6, en particulier par un procédé selon l'une ou plusieurs des revendications 7 à 17.
